# EUROPEAN PATENT APPLICATION

(11) **EP 3 808 650 A1**
(43) Date of publication of application: **21.04.2021**
(21) Application number: 19275100.6
(22) Date of filing: 17.10.2019
(51) Int. Cl.: B64C 1/06

(54) **PACKERS FOR USE IN AIRCRAFT ASSEMBLY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A packer (200) for application to an aircraft airframe (100), the packer (200) comprising: a sheet of material having a first surface and a second surface opposite to the first surface; and a plurality of voids (208) defined through the sheet of material from the first surface to the second surface, thereby to provide that the sheet of material is flexible. The sheet of material may define a frame (202) and a plurality of struts (202) extending from one side of the frame (202) to an opposite side of the frame (202). The frame (202) and the struts (206) may define, at least in part, the voids (208).

## Description

### FIELD OF THE INVENTION

The present invention relates to packers for use in aircraft assembly, and the production and use thereof.

### BACKGROUND

Aircraft typically comprise an airframe to which an aircraft external skin is fastened. Many aircraft airframes comprise a plurality of frames (or formers) and longerons and/or shear webs. The frames are typically laterally spaced from one another and arranged perpendicular to the longitudinal axis of the aircraft. The primary purpose of frames is to establish the shape of the fuselage. The longerons and/or shear webs are typically structural members which are attached between pairs of frames and are arranged parallel to the longitudinal axis of the aircraft. The longerons and/or shear webs support the aircraft skin and, in use, transfer aerodynamic loads acting on the skin onto the frames.

It is desirable that aircraft airframes are produced to be within very tight tolerance bounds.

Packers may be applied to the airframe and subsequently machined to provide an airframe having a desired shape.

### SUMMARY OF THE INVENTION

In a first aspect, the present invention provides a packer for application to an aircraft airframe. The packer comprises a sheet of material having a first surface and a second surface opposite to the first surface, and a plurality of voids defined through the sheet of material from the first surface to the second surface, thereby to provide that the sheet of material is flexible.

The sheet of material may define a frame, and a plurality of struts extending from one side of the frame to an opposite side of the frame. The frame and the struts may define, at least in part, the voids. The struts may be elongate members. The struts may be oblique to at least one member that forms the frame. A width of each of the struts may be between 1mm and 10mm. The sheet of material may further define a plurality of pads. One or more of the pads may substantially a disc of the material, e.g. a disc having a diameter that is at least twice that of a fastener that is to be fastened through a pad. The pads may extend from the frame. Each strut may extend between a respective pair of pads.

The material may be a material selected from the group of materials consisting of a fibre-reinforced composite material, carbon fibre composite, glass-fibre reinforced composite material, glass-reinforced plastic, aluminium, aluminium alloy, a plastic, steel, titanium, and titanium alloy.

The packer may have a substantially uniform thickness between the first surface and the second surface. The thickness may be between 0.5mm and 1.5mm.

In a further aspect, the present application provides a method of producing a packer, the packer being for application to an aircraft airframe. The method comprises: providing a sheet of material having a first surface and a second surface opposite to the first surface; and cutting a plurality of voids through the sheet of material from the first surface to the second surface, thereby to form the packer, the voids providing increased flexibility to the sheet of material.

In a further aspect, the present application provides a method of attaching an aircraft external skin to an aircraft airframe. The method comprises: providing a packer, the packer being in accordance with any preceding aspect; attaching the packer to an external surface of the airframe; optionally machining the packer to define a desired geometry for the airframe and packer assembly; and attaching the aircraft external skin to an external surface of the airframe and packer assembly.

The packer may comprise a plurality of pads, and attaching the aircraft external skin to the external surface of the airframe and packer assembly may use a plurality of fasteners, each fastener passing through the aircraft external skin, a respective pad, and at least part of the airframe.

The method may further comprise, after attaching the packer to the external surface of the airframe, filling one or more of the voids with an adhesive. Attaching the aircraft external skin to the external surface of the airframe and packer assembly may use a plurality of fasteners, each fastener passing through the aircraft external skin, a respective region of cured adhesive located in a void, and at least part of the airframe.

### BRIEF DESCRIPTION OF THE DRAWINGS

Figure 1 is a schematic illustration (not to scale) of a portion of an airframe of a fuselage of an aircraft.
Figure 2 is schematic illustration (not to scale) of a packer;
Figure 3 is a process flow chart showing steps of a method of producing the packer and attaching an aircraft external skin to the airframe using the packer;
Figure 4 is a schematic illustration (not to scale) of the airframe with the packer attached thereto; and
Figure 5 is a schematic illustration (not to scale) of a cross section through the assembled together airframe, packer, and external skin.

### DETAILED DESCRIPTION

It will be appreciated that relative terms such as horizontal and vertical, top and bottom, above and below, front and back, upper and lower, and so on, are used herein merely for ease of reference to the Figures, and these terms are not limiting as such, and any two differing directions or positions and so on may be implemented rather than truly horizontal and vertical, top and bottom, and so on.

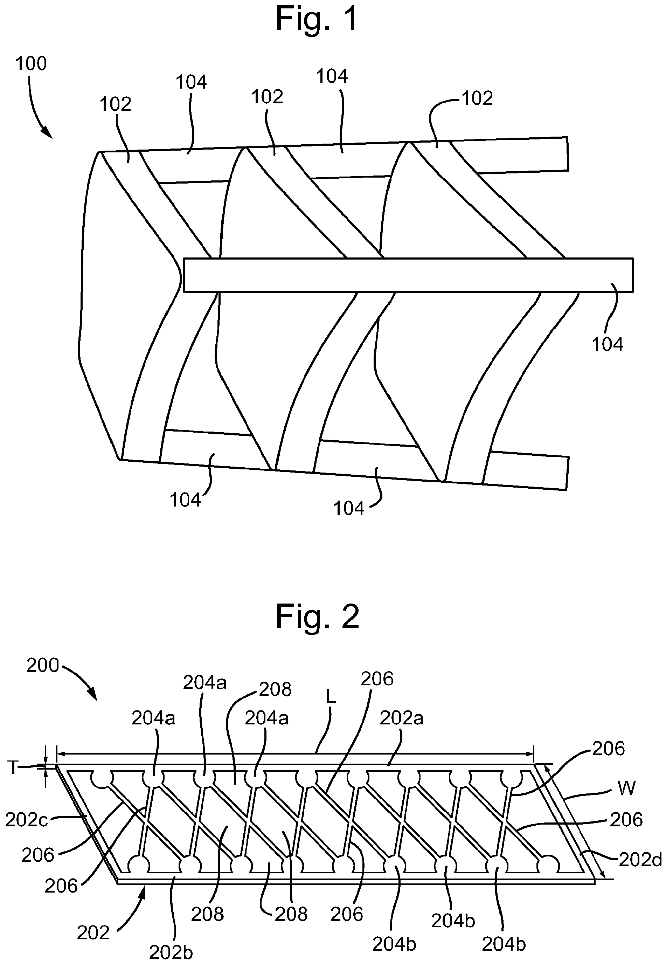

Figure 1 is a schematic illustration (not to scale) of a portion of an airframe 100 of an aircraft, this portion hereinafter being referred to as the "airframe 100". An aircraft external skin is to be fastened to the airframe 100.

The airframe 100 comprises three laterally spaced-apart frames or "formers" 102 and three longerons 104. It will be appreciated by those skilled in the art that the airframe 100 may comprises a different number of frames 102 and/or longerons 104.

The frames 102 are made of aluminium or titanium. The frames 102 define the shape of the aircraft fuselage and, in use, provide stability to the aircraft by preventing or opposing deflection of the longerons 104. When the aircraft is fully assembled, the frames 102 are arranged substantially perpendicularly to the longitudinal axis of the aircraft.

The longerons 104 are made of aluminium or titanium. The longerons 104 are elongate members to which the skin of the aircraft is fastened. When the aircraft is fully assembled, the longerons 104 run substantially parallel to the longitudinal axis of the aircraft. In this embodiment, the longerons 104 are fastened to the frames by a plurality of aircraft fasteners, e.g. bolts.

The aircraft 100 may further comprise additional structural elements not shown in Figure 1 for reasons or clarity and conciseness. Such example structural elements may attach together frames 102 and/or longerons 104. Examples of such structural elements may include, but are not limited to, shear webs, beams, keels, and fuel floors.

To produce the aircraft fuselage, a composite aircraft skin is fastened to the airframe 100. The outer shape of the assembled fuselage (i.e. the outer shape of the fuselage produced by fastening the composite skin to the airframe 100) is referred to as the Outer Mould Line (OML) of the fuselage. In this embodiment, the OML of the fuselage is to be within a pre-specified tolerance. The OML of the fuselage having the required tolerance is facilitated by the Inner Mould Line (IML) of the fuselage being within a pre-specified tolerance. The IML of the fuselage is the surface at which the airframe 100 and the aircraft skin abut, i.e. an outer surface of the airframe 100 and inner surface of the aircraft skin.

Figure 2 is a schematic illustration (not to scale) showing an embodiment of a packer 200.

In this embodiment, the packer 200 is for application to the outer surface the airframe 100 prior to the aircraft skin being fastened to the airframe 100. Thus, in the assembled aircraft, the packer 200 is sandwiched between the airframe 100 and the aircraft external skin.

The packer 200 may be considered to be a sacrificial layer of material that, after being attached to the airframe 100, may be machined to provide a desired IML for the airframe 100. In this way, attachment of the aircraft skin to the airframe 100 may be improved.

In this embodiment, the packer 200 is made of or comprises a carbon fibre composite (CFC) material.

The packer 200 is elongate. The packer 200 may have any appropriate length L. The length L of the packer 200 may be application dependent. The packer 200 may have any appropriate width W. The width W of the packer 200 may be application dependent. The packer 200 may have any appropriate thickness T, for example between about 0.5mm and about 1.5mm, or about 1mm. The thickness T of the packer 200 may be application dependent. Preferably, the packer 200 has substantially uniform thickness T prior to being attached to the airframe 100. The thickness T of the packer 200 is a distance between an upper surface and a lower surface of the packer 200.

In this embodiment, the packer 200 comprises a frame 202, a plurality of pads 204, and a plurality of struts 206. The frame 202, the pads 204, and the struts 204 are integrally formed. Preferably, the frame 202, the pads 204, and the struts 204 are formed from a single piece of material, i.e. as a single, integral entity.

The frame 202 is a substantially rectangular frame. The frame 202 comprises four elongate, substantially straight members that are arranged to define a rectangle. More specifically, the frame 202 comprises two elongate and opposing side members (namely a first side member 202a and a second side member 202b) that define the sides of the packer 200, and two elongate and opposing end members 202c, 202d disposed between the side members 202a, 202b. The end members 202c, 202d define the ends of the packer 200.

A first plurality of pads 204a (each of which is hereinafter referred to as a "first pad 204a") is arranged along an inside edge of the first side member 202a. A second plurality of pads 204b (each of which is hereinafter referred to as a "second pad 204b") is arranged along an inside edge of the second side member 202b. Each first pad 204a is positioned opposite to a respective one of the second pads 204b. Thus, in this embodiment, there is an equal number of first and second pads 204a, 204b.

The pads 204a, 204b may be approximately circular in shape (e.g. when the packer 200 is viewed from above or below). Thus, each pad 204a, 204b may define approximately a disc. The pads 204a, 204b may have any appropriate diameters. The diameters of the pads 204a, 204b may be application dependent. By way of example, the diameters of the pads 204a, 204b may be at least double the diameters of the fasteners that are to be placed through those ds 204a, 204b.

The struts 206 are elongate members. The struts may have any appropriate widths, for example between about 1mm and about 10mm, or between about 1mm and 5mm, e.g. about 3mm. The widths of the struts 206 may be application dependent.

In this embodiment, the struts 206 arranged across the width of the packer 200. Each strut 206 is coupled between a first pad 204a and a second pad 204b. More specifically, each strut 206 is coupled between a first pad 204a and a second pad 204b that is adjacent to the second pad 204b that is opposite to that first pad 204a. Also, each strut 206 is coupled between a second pad 204b and a first pad 204a that is adjacent to the first pad 204a that is opposite to that second pad 204b. In this way, two struts 206 extend from each pad 204a,b (except the pads at the ends of the packer, from which only a single struct extends). The struts 206 extend across the width W of the packer 200 oblique to the members 202a-d of the frame 202. The angles of struts to the members 202a-b may be varied by changing the spacing of the pads 204a,b.

The struts 206 that couple together adjacent pairs of pads 204a,b cross each other substantially along a longitudinal axis of the packer 200 (i.e. i.e. along a centreline of the packer 200 running along its length L). Struts 206 are integrally formed where they cross. Preferably, the struts 206 have uniform thickness along their lengths.

In this embodiment, the frame 202, the pads 204, and the struts 204 define a plurality of voids 208. The voids 208 may be considered to be through holes through the packer 200 from the upper surface of the packer 200 to the lower surface of the packer 200. In this embodiment, the widths of the voids 208 are greater than the widths of the struts 206.

Advantageously, the voids 208 tend to allow the packer 200 to bend or flex to any desired shape. The packer 200 tends to be more flexible than conventional CFC packers.

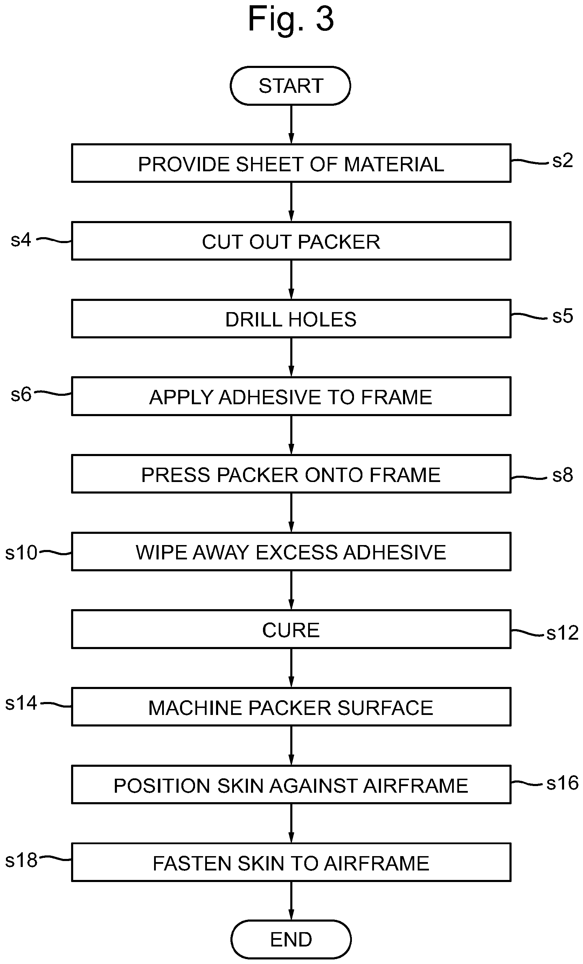

Figure 3 is a process flow chart showing certain steps of a process of producing the packer 200 and using the packer to secure an aircraft external skin to the airframe 100.

At step s2, a substantially flat sheet of CFC is provided. Preferably, the sheet has substantially uniform thickness. Preferably, the thickness of the sheet of CFC material is equal to the desired thickness of the packer 200.

At step s4, the packer 200 is cut from the provided sheet. In this embodiment, computer-controlled cutting is implemented to cut the packer shape from the provided sheet thereby to provide the packer 200. By way of example, laser cutting or water-jet cutting may be implemented to cut the packer 200 from the sheet.

Thus, the packer 200 is provided.

Advantageously, production of the packer 200 by cutting the packer 200 from a CFC sheet is low-cost, fast, and simple compared to production of conventional packers. Typically, complex geometry tools (e.g. a lay-up tool and a profile tool) are used to produce conventional CFC packers. Use of such tools tends to be avoided in the production of the packer 200.

At step s5, a plurality of holes is drilled through the packer 200. Each hole is drilled through a respective pad 202a,b of the packer 200. These drilled holes are for receiving aircraft fasteners for fastening the aircraft external skin to the airframe 100. Thus, in this embodiment, the pads 202a,b, act as landings or seats for receiving aircraft fasteners.

At step s6, an adhesive is applied to the external surface of the airframe 100 where the packer 100 is to be fixed. Any appropriate type of adhesive may be used. The adhesive may be application dependent. The adhesive may be a film adhesive or a paste adhesive. The adhesive may be applied in any appropriate way, for example by spraying or spreading liquid adhesive onto the airframe.

At step s8, the packer 200 is pressed onto the portion of the airframe 100 to which the adhesive was applied at step s6. The packer 200 is pressed onto the airframe 100 such that the packer 200 is in intimate contact with the airframe 100. The packer 200 may be pressed or applied onto the airframe 100 is any appropriate way, for example using a roller or by-hand.

Advantageously, the voids 208 of the packer 200 tend to allow for the packer 200 to be pressed through the adhesive, e.g. such that the adhesive is forced by the packer material into the voids 208. This tends to facilitate accurate positioning of the packer on to the airframe 100 and provide that the packer 200 is held in position by the adhesive without a need for clamping.

Advantageously, use of the flexible packer 200 tends to reduce or eliminate a need for clamping devices (e.g. G-clamps) to be used to hold the packer 200 onto the airframe 100 compared to conventional, stiffer packers. The flexible packer 200 tends to bend such that it conforms to the shape of the airframe 100 to which it is applied, and may be fixed to the airframe 100 without need for clamps or with a reduced clamping requirement. Furthermore, it tends to be possible to apply the flexible packer 200 to parts having different geometries. The flexible packer 200 tends to account for manufacturing tolerances in the parts to which it is applied.

The widths of the frame 202, struts 206, and pads 204 are relatively small, e.g. compared to conventional packers. Thus, advantageously, air entrapment under the packer 200 when the packer 200 is adhered to the airframe 100 tends to be reduced or eliminated. Furthermore, it tends to be easier to remove any trapped air between the packer 200 and airframe 100 prior to curing of the adhesive. Thus, the packer 200 tends to provide for an improved bond between the packer 200 and the airframe 100, and an improved peel strength. Furthermore, the reduction in entrapped air tends to reduce the likelihood of disbonds, moisture ingress, and corrosion.

At step s10, excess adhesive is removed from the airframe 100 and packer 200. This is performed prior to the curing of the adhesive. Removal of the excess adhesive may be performed in any appropriate way, for example by wiping or scraping using an appropriate tool. For example, a scraper may be scraped over the upper surface of the packer 200 (i.e. flush with the upper surface) thereby to remove any excess adhesive that extends above the upper surface of the packer 200.

Conventionally, removal of the uncured excess adhesive when using conventional packer tends to be difficult, for example since the clamping devices (e.g. G-clamps) that are conventionally used to press the conventional packers onto the airframe may obstruct the process. As such, conventionally, excess adhesive is removed after curing, which tends to be more difficult and risks damage to the airframe/packer. Use of the above described flexible packer 200 advantageously tends to avoid or reduce the use of such clamping device, thereby facilitating the removal of unwanted adhesive before it is cured.

At step s12, the adhesive is cured. Curing of the adhesive may be done in any appropriate way. Curing the adhesive may comprise leaving the adhesive to cure over time, or applying electromagnetic radiation (e.g. heat and/or light) to the adhesive.

Thus, the packer 200 is fixed to the airframe 100.

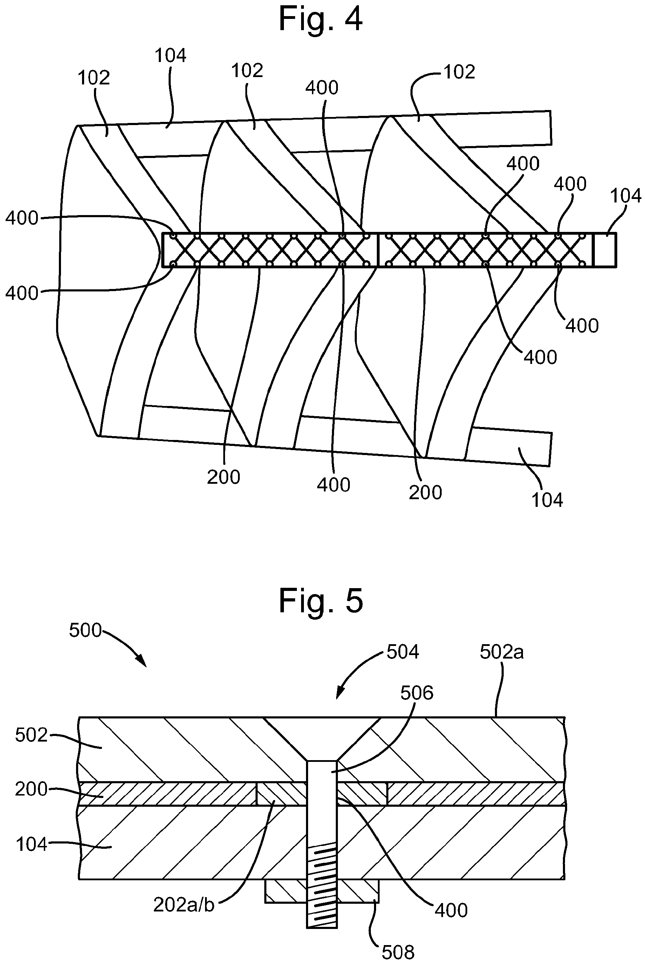

Figure 4 is a schematic illustration showing the aircraft airframe 100 having multiple packers 200 attached thereto. Figure 4 shows packers 200 attached to a longeron 104 of the airframe 100. However, it will be appreciated by those skilled in the art that one or more packers 200 may be attached to any appropriate surface of the airframe 100.

Figure 4 further shows a plurality of holes 400 that were drilled through the pads 202a,b of the packer at step s5 above. In this embodiment, these holes 400 through the packer 200 align with respective through holes through the longeron 104. These aligned pairs of holes are for receiving aircraft fasteners, as described in more detail later below with reference to Figure 5.

At step s14, the external surface of the packer 200 (i.e. the surface opposite to the surface adhered to the airframe 100) is machined to define a desired IML for the airframe 100. This machining of the packer 200 may comprise measuring an external surface of the assembly (i.e. the airframe 100 with the packer 200 applied thereto), and, using the measurements, controlling a machining apparatus (e.g. a computer numerical control (CNC) machining apparatus) to machine the packer 200 to define a desired IML.

Thus, an airframe assembly defining an IML within a specified tolerance tends to be provided.

At step s16, the aircraft external skin is positioned against the outer surface of the packer 200. The aircraft external skin is positioned such that through holes through the aircraft external skin are aligned with the holes 400 through the packer 200 and longeron 104.

Advantageously, the IML being within the specified tolerance tends facilitate the locating of the aircraft skin against the airframe assembly.

At step s18, the aircraft external skin is fastened to the airframe 100 using a plurality of aircraft fasteners.

Figure 5 is a schematic illustration (not to scale) showing a cross section through a portion of the structure 500 formed by fastening the aircraft external skin 502 to the airframe 100. Figure 5 illustrates attachment of the aircraft external skin 502 to the airframe 100 by a fastener 504.

In this embodiment, the fastener 504 comprises a threaded bolt 506 and a nut 508.

The bolt 506 passes, in turn, through the aircraft external skin 502, a pad 202a/b of the packer 200, a longeron 104 of the airframe 100, and the nut 508 which secures the bolt 506.

Thus, the pad 202a/b is a landing for the fastener 504. Advantageously, in use, the pads 202a/b of the packers 200 bear the loads from the fasteners 504 passing therethrough. In this embodiment, the packer 200 is a load-bearing structure. The material of the packer 200 (i.e. one or more of the frame 202, one or more pads 204, and one or more struts 206) is located at load-critical positions on the airframe assembly (preferably at all load-critical locations). An example load-critical position may be a position at which a fastener is located. Also, in this embodiment, the voids 208 are not located at load-critical positions on the airframe assembly.

In this embodiment, the hole in the aircraft external skin 502 through which the bolt 506 passes is countersunk thereby to provide that the head of the bolt 506 is substantially flush with the external surface 502a of the aircraft external skin 502.

Advantageously, the IML being within the specified tolerance tends to provide that the OML, which is defined by the external surface 502a of the aircraft external skin 502, is within a pre-specified tolerance.

Thus, the process of producing the packer 200 and using the packer 200 to secure an aircraft external skin 502 to the airframe 100 is provided.

It should be noted that certain of the process steps depicted in the flowchart of Figure 3 and described above may be omitted or such process steps may be performed in differing order to that presented above and shown in that Figure. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, an airframe of an aircraft fuselage is produced. However, in other embodiments, a different type of structure is produced. For example, an airframe of a different part of the aircraft, e.g. a wing or the empennage, may be produced.

In the above embodiments, the packer is made of or comprises CFC. However, in other embodiments, the packer is made of one or more different material instead of or in additional to CFC. Examples of appropriate materials include but are not limited to glass-fibre reinforced composite materials, e.g. glass-reinforced plastic (GRP), aluminium and alloys thereof, plastics, steel, titanium and alloys thereof.

In the above embodiments, the packer is elongate and rectangular. However, in other embodiments, the packer has a different appropriate shape. The shape of the packer may be application dependent.

In the above embodiments, the shape of the packer and the shapes of the voids therethrough are defined by the frame, the plurality of pads, and the plurality of struts. In other embodiments, the packer has a different shape, for example a frame, struts and/or pads may be arranged differently, such that the shape of the voids are different. The voids may have any appropriate shape including, but not limited to, triangular, square, rhombus, pentagonal, hexagonal, heptagonal, octagonal, etc. For example, the packer may comprise voids defining a honeycomb pattern.

In the above embodiments, the pads are substantially disc-shaped structures. However, in other embodiments, one or more of the pads is a different shape, e.g. polygonal such as square, triangular, hexagonal, etc.

In the above embodiments, the packer is produced by cutting the packer from a CFC sheet. However, in other embodiments, the packer is formed in a different way, for example using additive manufacturing (AM) such as fused deposition modelling (FDM).

In the above embodiments, the pads of the packer provide landings for the fasteners that fasten the aircraft skin to the airframe. The pads are load-bearing structures that bear the loads from the fasteners. The packer is a load-bearing structure, with the packer material located at load-critical positions on the airframe assembly and the voids located at (e.g. only) non-load-critical positions.

However, in other embodiments the packer is non-load-bearing. In such embodiments, packer material may be located at (e.g. only) the non-load-critical positions on the airframe assembly, while the voids are located at (e.g. all of) the load-critical positions. In such embodiments, after the packer 200 is applied to the airframe 100 (e.g. at step s8 or s10 in the method of Figure 3 described in more detail earlier above), the cavities or recesses that are defined by the voids 208 may be filled with a load-bearing adhesive (for example Hysol, such as Loctite EA9394S or Loctite EA9395). The packer 200 acts as a "dam" that retains the liquid/uncured load-bearing adhesive in desired positions against the airframe 100. The aircraft skin 502 may than be disposed against the airframe 100 (with the packer 200 and load-bearing adhesive thereon) and the adhesive cured. Fasteners 504 may be used to fasten the aircraft skin 502 to the airframe 100. The fasteners 504 pass through the cured load-bearing adhesive, and not through the packer material.

Advantageously, use of the packer to provide a dam for retaining the liquid/uncured load-bearing adhesive tends to be faster than relatively complicated conventional methods of providing a dam. Furthermore, as the packer/dam is not a load-bearing structure in such embodiments, lower-cost and/or lightweight materials can be used for the packer (e.g. low-cost plastic). The packer/dam can be produced quickly in any appropriate shape, e.g. using AM. Advantageously, this use of the packer may reduce a risk of cracking of the load-bearing adhesive.

## Claims

1. A packer for application to an aircraft airframe, the packer comprising:
a sheet of material having a first surface and a second surface opposite to the first surface; and
a plurality of voids defined through the sheet of material from the first surface to the second surface, thereby to provide that the sheet of material is flexible.

2. The packer of claim 1, wherein:
the sheet of material defines:
a frame; and
a plurality of struts extending from one side of the frame to an opposite side of the frame; and
the frame and the struts define, at least in part, the voids.

3. The packer of claim 2, wherein the struts are elongate members.

4. The packer of claim 2 or 3, wherein the struts are oblique to at least one member that forms the frame.

5. The packer of any of claims 2 to 4, wherein a width of each of the struts is between 1mm and 10mm.

6. The packer of any of claims 2 to 5, wherein the sheet of material further defines a plurality of pads.

7. The packer of claim 6, wherein one or more of the pads is substantially a disc of the material.

8. The packer of claim 6 or 7, wherein the pads extend from the frame.

9. The packer of any of claims 6 to 8, wherein each strut extends between a respective pair of pads.

10. The packer of any of claims 1 to 9, wherein the material is a material selected from the group of materials consisting of a fibre-reinforced composite material, carbon fibre composite, glass-fibre reinforced composite material, glass-reinforced plastic, aluminium, aluminium alloy, a plastic, steel, titanium, and titanium alloy.

11. The packer of any of claims 1 to 10, wherein the packer has a substantially uniform thickness between the first surface and the second surface of between 0.5mm and 1.5mm.

12. A method of producing a packer, the packer being for application to an aircraft airframe, the method comprising:
providing a sheet of material having a first surface and a second surface opposite to the first surface; and
cutting a plurality of voids through the sheet of material from the first surface to the second surface, thereby to form the packer, the voids providing increased flexibility to the sheet of material.

13. A method of attaching an aircraft external skin to an aircraft airframe, the method comprising:
providing a packer, the packer being in accordance with any of claims 1 to 11;
attaching the packer to an external surface of the airframe;
optionally machining the packer to define a desired geometry for the airframe and packer assembly; and
attaching the aircraft external skin to an external surface of the airframe and packer assembly.

14. The method of claim 13, wherein:
the packer is in accordance with claim 6 or any claim dependent on claim 6; and
attaching the aircraft external skin to the external surface of the airframe and packer assembly uses a plurality of fasteners, each fastener passing through the aircraft external skin, a respective pad, and at least part of the airframe.

15. The method of claim 13, wherein
the method further comprises, after attaching the packer to the external surface of the airframe, filling one or more of the voids with an adhesive; and
attaching the aircraft external skin to the external surface of the airframe and packer assembly uses a plurality of fasteners, each fastener passing through the aircraft external skin, a respective region of cured adhesive located in a void, and at least part of the airframe.
